# EUROPEAN PATENT APPLICATION

(11) **EP 4 050 537 A1**
(43) Date of publication of application: **31.08.2022**
(21) Application number: 20880174.6
(22) Date of filing: 09.07.2020
(51) Int. Cl.: G06Q 10/06, G06F 13/00, G06F 40/186

(54) **INFORMATION MANAGEMENT SYSTEM, SERVER, AND USER TERMINAL**

(30) Priority: 25.10.2019 JP 2019194310
(71) Applicant: Julia Co., Ltd, Hachioji-shi, Tokyo 193-0821 (JP)
(72) Inventor: SUDO Terumasa, Hachioji-shi, Tokyo 193-0821 (JP)
(74) Representative: dompatent von Kreisler Selting Werner - Partnerschaft von Patent- und Rechtsanwälten mbB
(86) International application number: PCT/JP2020/026888
(87) International publication number: WO 2021/079569

(57) **Abstract**

A server according to an aspect of the present invention is connected with a plurality of user terminals via a communication network. The server provides a user terminal with user screens capable of displaying both of a form (category) defining a data structure and an entity (schedule) being a data set created on the basis of a form. The server creates an entity in accordance with selection of a form and an instruction to create an entity based on the selected form performed on a user screen by a user, and sets one or more users to be members of a form or an entity in accordance with specification from a user on a user screen. When providing a user screen to a user, the server selects an entity with which the user is associated as a member thereof from among a plurality of entities.

## Description

### Field

The present invention relates to an information providing method and in particular, to a technology for changing the way of providing information depending on users.

### Background

Various software tools for sharing information among a plurality of users have been provided. For example, checking one's schedule on a group calendar, checking work progress by using workflow software, and the like have been improving environments that facilitate team work involving a number of users even at geographically distant locations.

### Related Art List

### Patent Literatures

Patent Literature 1: JP 2016-207012 A

### Summary

### Technical Problem

As the number of people involved is larger, information is likely to be more and more enormous and structured. For example, in a product development project, a variety of information on research and development, material procurement, advertising, money management, and the like is produced. In addition, research and development includes software development, which may include work for developing a communication protocol.

A project leader would want to get a general overview covering from research and development to money management, but those who attempt to know every detail of information relating to a project thoroughly would suffer from information overload, which would end up being unproductive. In contrast, a development engineer needs to know information on research and development in detail, but need not know much about work in other fields such as money management in detail. Each of members of one project may want information different in level and in quantity from that other members want.

The present invention has been achieved on the basis of recognition of the aforementioned problems, and a chief object thereof is to provide a technology for allowing each user to readily extract information necessary for the user from an information set.

### Solution to problem

A server according to an embodiment of the present invention is connected with a plurality of user terminals via a communication network.

The server includes a user screen providing unit for providing a user terminal with user screens capable of displaying both of a form defining a data structure and an entity being a data set created on the basis of a form; an entity setting unit for creating an entity in accordance with an entity creating instruction based on selection of a form performed on a user screen by a user and the selected form; and a member setting unit for setting one or more users to be members of a form or an entity in accordance with specification performed on a user screen by a user.

When providing a user screen to a user, the user screen providing unit selects, as an entity to be displayed on the user screen, an entity with which the user is associated as a member thereof from among a plurality of entities.

A user terminal according to an embodiment of the present invention includes a user screen displaying unit for displaying user screens capable of displaying both of a form defining a data structure and an entity being a data set created on the basis of a form; an item inputting unit for receiving, from a user, specification of an item to be enabled from a plurality of items provided in advance in a form; an entity creating and inputting unit for receiving input of item data of an item enabled in a form; and a member inputting unit for receiving specification of one or more users to be members of a form or an entity.

The user screen displaying unit selectively displays, on the user screens, an entity with which the user of the user terminal is associated as a member thereof from among a plurality of entities.

An information management system according to an embodiment of the present invention includes one or more user terminals and a server connected with each other via a communication network.

The server includes: a user screen providing unit for providing the user terminals with user screens capable of displaying both of a form defining a data structure and an entity being a data set created on the basis of a form; a form setting unit for defining a data structure of a form by enabling an item specified by a user from a plurality of items provided in advance in the form; an entity setting unit for setting an entity based on a form by receiving input of item data of an item enabled in the form; a member setting unit for setting one or more users to be members of a form or an entity in accordance with specification performed on a user screen by a user; an entity updating unit for updating item data of an entity in accordance with an instruction to update the item data of the entity from a user; and an update notifying unit for notifying a user terminal of update of an entity.

The user terminal includes: a user screen displaying unit for displaying user screens; an item inputting unit for receiving, from a user, specification of an item to be enabled in a form; an entity creating and inputting unit for receiving input of item data of an item enabled in a form; and a member inputting unit for receiving specification of one or more users to be members of a form or an entity.

When providing a user screen to a user, the user screen providing unit of the server selects, as an entity to be displayed on the user screen, an entity with which the user is associated as a member thereof from among a plurality of entities. The update notifying unit of the server sets a member of an updated entity to be a user to be notified of the update. The user screen displaying unit of the user terminal displays, on a user screen, an entity with which the user of the user terminal is associated as a member thereof from among a plurality of entities.

### Advantageous Effects of Invention

According to the present invention, a user can readily extract information necessary for the user from an information set.

### Brief Description of Drawings

FIG. 1 is a hardware configuration diagram of an information management system.
FIG. 2 is a functional block diagram of a server.
FIG. 3 is a functional block diagram of a user terminal.
FIG. 4 is a schematic diagram for explaining the relation between forms and entities.
FIG. 5 is a schematic diagram for explaining association setting of forms.
FIG. 6 is a screen diagram of a home screen.
FIG. 7 is a screen diagram of a form creation screen.
FIG. 8 is a screen diagram of a first form definition screen.
FIG. 9 is a screen diagram of a second form definition screen.
FIG. 10 is a screen diagram of a member registration screen.
FIG. 11 is a screen diagram of an entity creation screen.
FIG. 12 is a screen diagram of a form list screen.
FIG. 13 is a screen diagram of an entity list screen.
FIG. 14 is a screen diagram of an association setting screen.
FIG. 15 is a screen diagram of an entity view screen.
FIG. 16 is a flowchart illustrating processes of entity display.
FIG. 17 is a screen diagram of the form list screen at update notification.
FIG. 18 is a schematic diagram for explaining the relation between genres and forms.
FIG. 19 is a screen diagram of a form list screen when a genre is set.

### Description of Embodiments

An embodiment will be described with reference to project management of a clothing manufacturer that designs children's clothing.

Typically, in a clothing manufacturer, a "chief director" creates a concept for children's clothing. At the concept stage, only images and features of children's clothing are put into rough sketches. A "designer" makes a plurality of design ideas in line with the concept.

Once a design idea is determined, a "pattern maker" makes a pattern by computer-aided design (CAD). Subsequently, a trial product of children's clothing is actually made on the basis of the pattern. A "person in charge of material procurement" supplies materials for trial production (such as cloth and zippers). While trial production and supply are repeated, comfort, silhouettes, productivity (manufacturability), and the like. The pattern maker also checks the resulting trial product and modifies the pattern as necessary.

After the trial production, the clothing manufacturer places an order with an "outsourcing contractor" that operates factories for mass production. The outsourcing contractor makes the trial product by using materials to be used for products to be sold. The outsourcing contractor actually makes the trial product to examine the mass productivity thereof. It is not unusual that a designer considers opinions from an outsourcing contractor and thus reviews a design.

In this manner, a number of people need to cooperate with each other to pursue a project while controlling a number of processes until a piece of children's clothing is completed. A "manager" who manages a project controls overall complicated schedules until children's clothing is completed. Typically, a clothing manufacturer has hundreds to thousands of children's clothing projects ongoing simultaneously, which is likely to impose extremely heavy management burdens particularly on managers.

In order to make a project go smoothly, it is important to improve the efficiency of communication of various information on the project. In order to improve the information communication efficiency, it is preferable to process information into a format that is easily understandable for recipients and standardize the information before passing the information. If recipients receive too much information, however, this may lower the productivity and may lead to human error. Thus, it is also important to separate necessary information from unnecessary information depending on the recipients.

In an information management system described in the embodiment, information is managed in units of "entities". An entity refers to a set of information necessary for managing one process for certain products such as "trial production of a design idea of hakama (Japanese divided skirt) A" or "a trial piece for mass production of a lesson tote bag B". An entity is created on the basis of a standard called a "form". A form defines the data structure of an entity.

One or more users are associated as "members" with a form. For example, in a case where users P1, P2, and P3 are associated with a form F1, an entity E11 (information set) created on the basis of the form F1 can be accessed only by the users P1, P2, and P3. In other words, users other than these three users cannot know information in the entity E11. Such an information managing method allows limiting of members depending on entities (information sets).

Hereinafter, details of the information management system of the embodiment will be described.

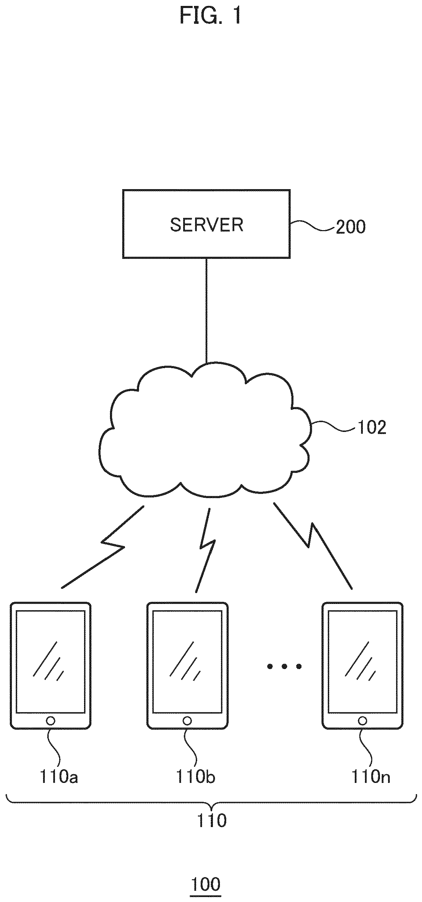

FIG. 1 is a hardware configuration diagram of an information management system 100.

In the information management system 100, a plurality of user terminals 110a, 110b, ..., 110n (hereinafter collectively referred to as "user terminals 110" when all the user terminals are referred to or when the user terminals are not particularly distinguished from each other) are connected with a server 200 via the Internet 102. The user terminals 110 in the embodiment are assumed to be smartphones. The user terminals 110 may alternatively be general-purpose computers such as laptop PCs. The user terminals 110 are connected wirelessly with the Internet 102.

The user terminals 110 are used by users (employees or outsourcing contractors) of a clothing manufacturer. The server 200 provides an information sharing service relating to a children's clothing project to the user terminals 110. There is no need to install special software in the user terminals 110, and the user terminals 110 can receive the service by accessing the server 200 via web browsers.

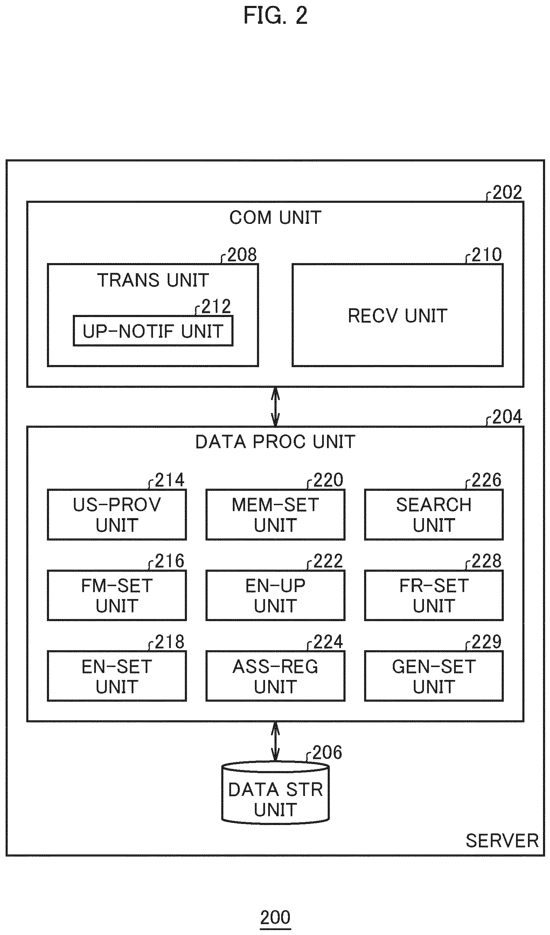

FIG. 2 is a functional block diagram of the server 200.

Components of the server 200 are implemented by hardware including computing units such as central processing units (CPUs) and various coprocessors, storage devices such as memories and storages, and wired or wireless communication lines that connect these units and devices, and software that is stored in the storage devices and supplies processing instructions to the computing units. Computer programs may be constituted by device drivers, operating systems, various application programs on upper layers thereof, and a library that provides common functions to these programs. Blocks to be described below do not refer to configurations in units of hardware but to blocks in units of functions.

The same is applicable to the user terminals 110.

The server 200 includes a communication unit 202 (com unit 202), a data processing unit 204 (data proc. unit 204), and a data storage unit 206 (data str unit 206).

The communication unit 202 performs communication processing. The data storage unit 206 stores various data relating to forms and entities. The data processing unit 204 performs various processes on the basis of data obtained by the communication unit 202 and data stored in the data storage unit 206. The data processing unit 204 also functions as an interface of the communication unit 202 and the data storage unit 206.

The communication unit 202 includes a transmitting unit 208 (trans unit 208) and a receiving unit 210 (recv unit 210).

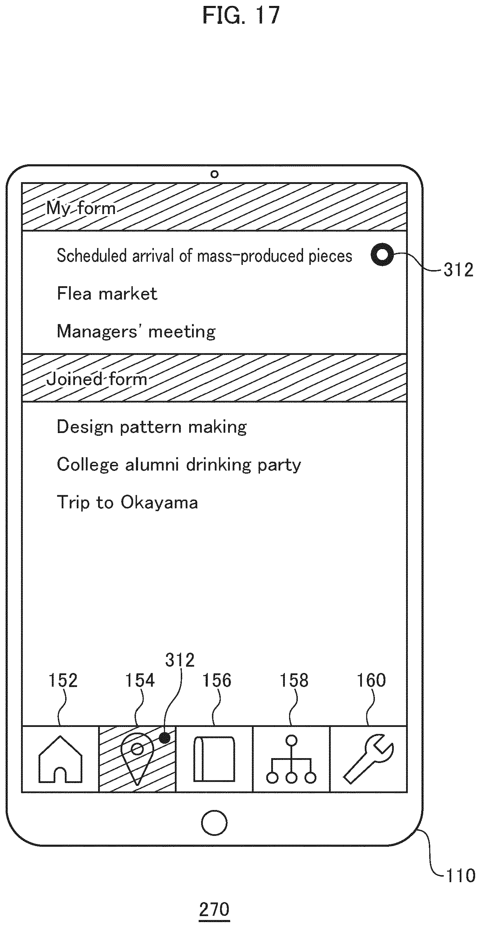

The transmitting unit 208 transmits various data to the user terminals 110, and the receiving unit 210 receives various data from the user terminals 110. The transmitting unit 208 includes an update notifying unit 212 (up-notif unit 212). When data included in an entity is updated, the update notifying unit 212 notifies members of the entity of the update (this will be described later with reference to FIG. 17, etc.).

The data processing unit 204 includes a user screen providing unit 214 (us-prov unit 214), a form setting unit 216 (fm-set unit 216), an entity setting unit 218 (en-set unit 218), a member setting unit 220 (mem-set unit 220), an entity updating unit 222 (en-up unit 222), an association registering unit 224 (ass-reg unit 224), a searching unit 226 (search unit 226), a friend setting unit 228 (fr-set unit 228), and a genre setting unit 229 (gen-set unit 229).

The user screen providing unit 214 generates various user screens, and provides the user screens to the user terminals 110. The user screens are provided as web pages. The form setting unit 216 creates a form in accordance with an instruction from a user. The form is assigned a form ID. The entity setting unit 218 creates an entity in accordance with an instruction from a user. The entity is assigned an entity ID and a form ID of the form from which the entity is derived.

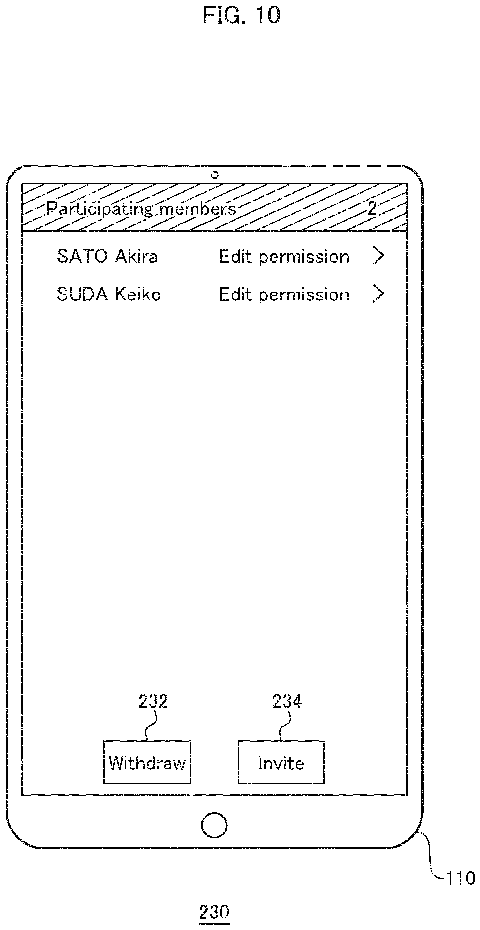

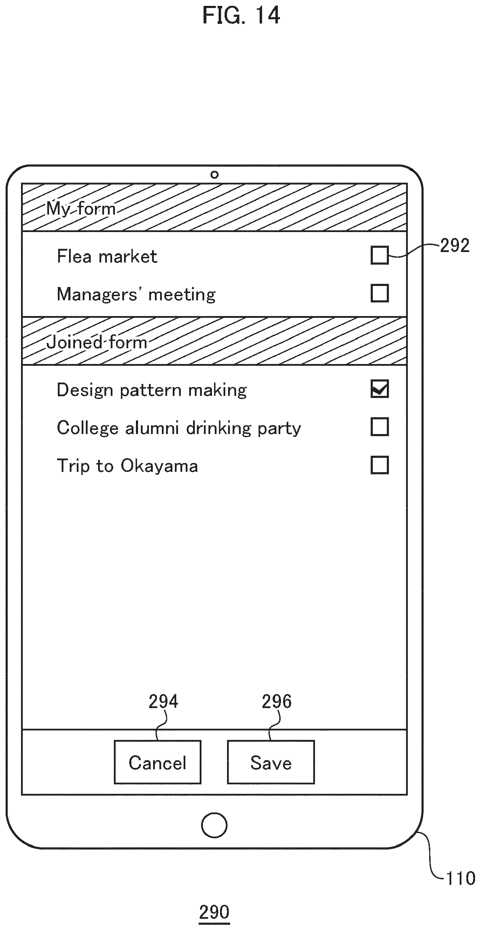

The member setting unit 220 sets members for a form. The creator of the form invites other users as members, and associates the form ID with user IDs of the members (this will be described later with reference to FIG. 10). The entity updating unit 222 updates data included in an entity in accordance with an instruction from a user. The association registering unit 224 associates a form with another form in accordance with an instruction from a user (hereinafter referred to as "association setting") (this will be described later with reference to FIG. 14). The searching unit 226 searches for a form or an entity in accordance with a search instruction from a user.

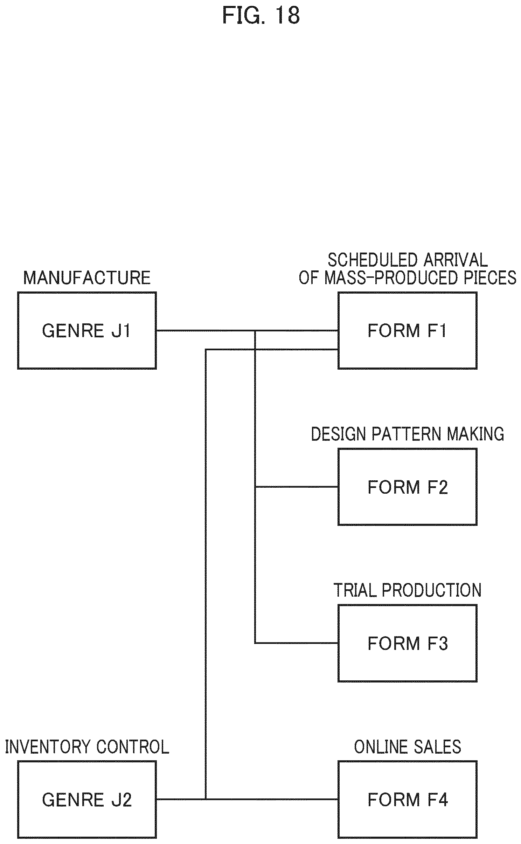

The friend setting unit 228 manages friend setting among users. A method for setting friends is similar to that of a typical social networking service (SNS). For example, a user P1 selects a user P2 with whom the user P1 wants to be friends from users registered in the server 200, and sends a "friend request" thereto. If the user P2 "accepts", the friend setting unit 228 registers the user P1 and the user P2 as "friends". The genre setting unit 229 sets a "genre" as a group of forms (this will be described later with reference to FIG. 18).

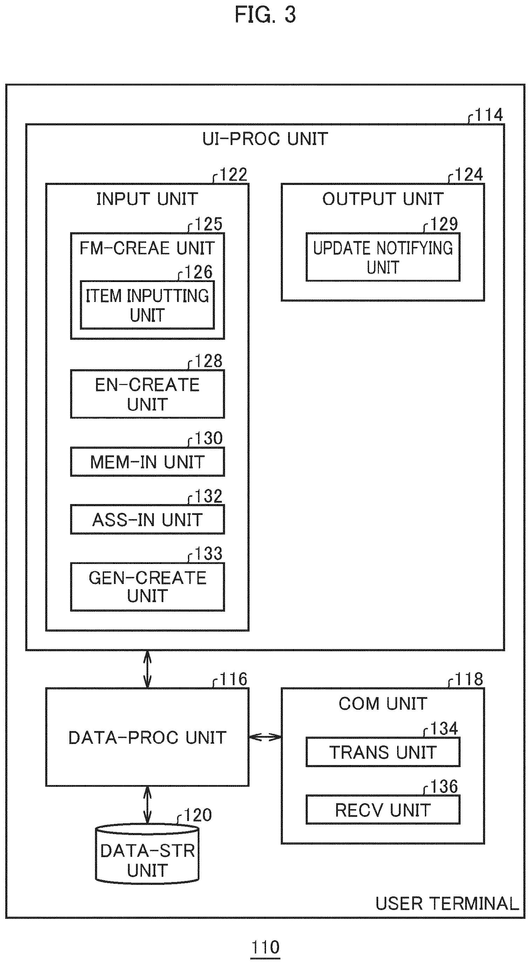

FIG. 3 is a functional block diagram of a user terminal 110.

The user terminal 110 includes a user interface processing unit 114 (ui-proc unit 114), a data processing unit 116 (data proc unit 116), a communication unit 118 (com unit 118), and a data storage unit 120 (data str unit 120).

The communication unit 118 performs communication processing. The user interface processing unit 114 receives operations from a user, and performs processing relating to a user interface such as image display and audio output. The data storage unit 120 stores various data. The data processing unit 116 performs various processes on the basis of data obtained by the communication unit 118 and the user interface processing unit 114 and data stored in the data storage unit 120. The data processing unit 116 also functions as an interface of the user interface processing unit 114, the communication unit 118, and the data storage unit 120.

The communication unit 118 includes a transmitting unit 134 (trans unit 134)for transmitting various data to the server 200, and a receiving unit 136 (recv unit 136) for receiving data from the server 200. Results of inputs from the user are transmitted by the transmitting unit 134 to the server 200 as necessary.

The user interface processing unit 114 includes an input unit 122 for receiving inputs made by the user, and an output unit 124 for outputting various data for the user.

The input unit 122 includes a form creating and inputting unit 125 (fm-create unit 125), an entity creating and inputting unit 128 (en-create unit), a member inputting unit 130 (mem-in unit 130), an association inputting unit 132 (ass-in unit 132), and a genre creating and inputting unit 133 (gen-create unit 133). The form creating and inputting unit 125 receives creation and update of a form. The form creating and inputting unit 125 includes an item inputting unit 126. The item inputting unit 126 receives setting of whether an "item (to be described later)" of a form is enabled or disabled. The entity creating and inputting unit 128 receives creation and update of an entity. The member inputting unit 130 receives setting of associating a member with a form. The association inputting unit 132 receives association setting of a form and another form. The genre creating and inputting unit 133 receives creation and update of a genre.

The output unit 124 includes an update notifying unit 129. The update notifying unit 129 notifies the user of the update of an entity on a screen. Details thereof will be described later with reference to FIG. 17.

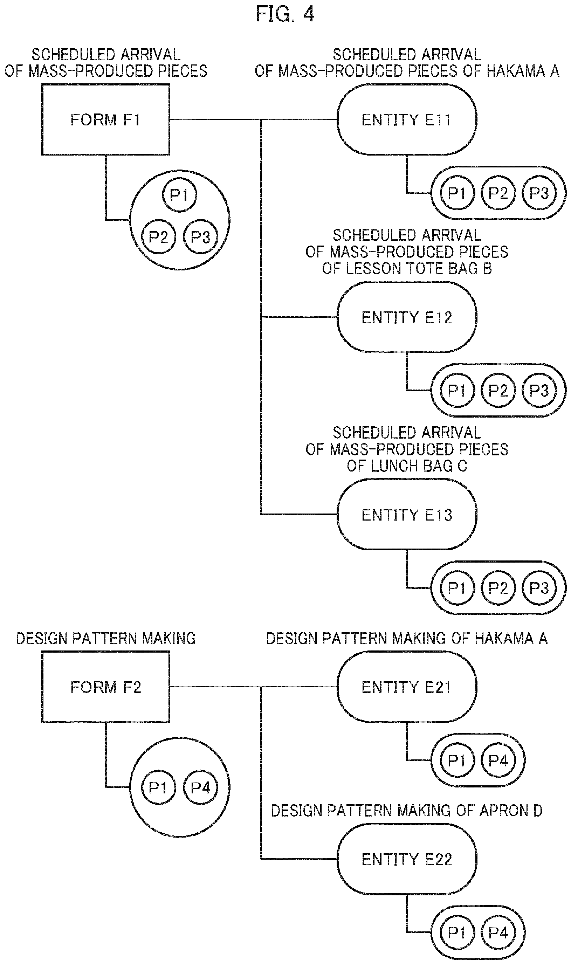

FIG. 4 is a schematic diagram for explaining the relation between forms and entities.

As described above, an entity is an information set, and a form is a standard defining the data structure of an entity. A number of items (hereinafter referred to as a "base item group") are prepared for a form. In creation of a form, items to be used are selected from the base item group and enabled, and thus the types and quantity of data of an entity can be defined, details of which will be described later.

For example, in a case where a form Fa enables an item 1, an item 2, and an item 3, an entity Ea1 created from the form Fa also includes the item 1, the item 2, and the item 3, and data (hereinafter referred to as "item data") associated with the three items are set. In addition, in a case where a form Fb enables the item 1, an item 4, an item 5, an item 6, and an item 7, an entity Eb1 created from the form Fb also includes the item 1, the item 4, the item 5, the item 6, and the item 7, and includes five item data. The entity Eb1 has a larger data quantity than the entity Ea1, and has the item 1 and the item 4, that is, a data structure partially in common with that of the entity Ea1.

As described above, an entity is created from a form (standard). A plurality of entities can be created from one form. In FIG. 4, three entities E11, E12, and E13 are created from a form F1. In addition, two entities E21 and E22 are created from a form F2.

An entity in the embodiment is an information set for managing the schedule of one process among a number processes relating to manufacture of children's clothing. Hereinafter, assume that a form F1 corresponds to "scheduled arrival of mass-produced pieces", an entity E11 corresponds to "scheduled arrival of mass-produced pieces of hakama A", an entity E12 corresponds to "scheduled arrival of mass-produced pieces of lesson tote bag B", and an entity E13 corresponds to "scheduled arrival of mass-produced pieces of lunch bag C". In addition, assume that a form F2 corresponds to "design pattern making", an entity E21 corresponds to "design pattern making of hakama A", and an entity E22 corresponds to "design pattern making of apron D".

For example, for schedule management of scheduled arrival of mass-produced pieces of children's clothing, the form F1 for "scheduled arrival of mass-produced pieces" is created. Subsequently, for managing the scheduled arrival of mass-produced pieces of hakama A, the entity E11 (scheduled arrival of mass-produced pieces of hakama A) is created on the basis of the form F1 (scheduled arrival of mass-produced pieces). For the lesson tote bag B, another entity E12 (scheduled arrival of mass-produced pieces of lesson tote bag B) can be created on the basis of the same form F1. Because the entity E11 (scheduled arrival of mass-produced pieces of hakama A) and the entity E12 (scheduled arrival of mass-produced pieces of lesson tote bag B) are both created on the basis of the form F1 (scheduled arrival of mass-produced pieces), the two entities have different item data (contents) from each other, but have the same data structure (item). As a result of defining a data structure by a form, data structures of entities can be made common or standardized, which improves visual recognition of information.

As described above, one or more members (users) are associated with a form. In FIG. 4, three members, which are users P1, P2, and P3, are associated with the form F1 (scheduled arrival of mass-produced pieces). Users having access rights to the entities E11, E12, and E13 derived from the form F1 (scheduled arrival of mass-produced pieces) are limited to the users P1, P2, and P3.

Similarly, the members of the form F2 (design pattern making) are users P1 and P4. Users having access rights to the entity E21 (design pattern making of hakama A) and the entity E22 (design pattern making of apron D) derived from the form F2 (design pattern making) are limited to the users P1 and P4.

Thus, the users P2 and P3 can access the entities E11, E12, and E13, but cannot access the entities E21 and E22. The user P1 can access all of the five entities. The user P4 can only access the entities E21 and E22. A user P5 can access none of the entities in FIG. 4.

As described above, members are associated with a form, so that users having access rights to entities derived from the form can be limited. This enables separation of information to be passed to individual users (persons concerned) involved in a project from information not to be passed. Limiting provision of unnecessary information while improving information sharing performance can reduce stress attributed to information overload. In addition, setting access rights to each entity is effective in preventing leakage of information.

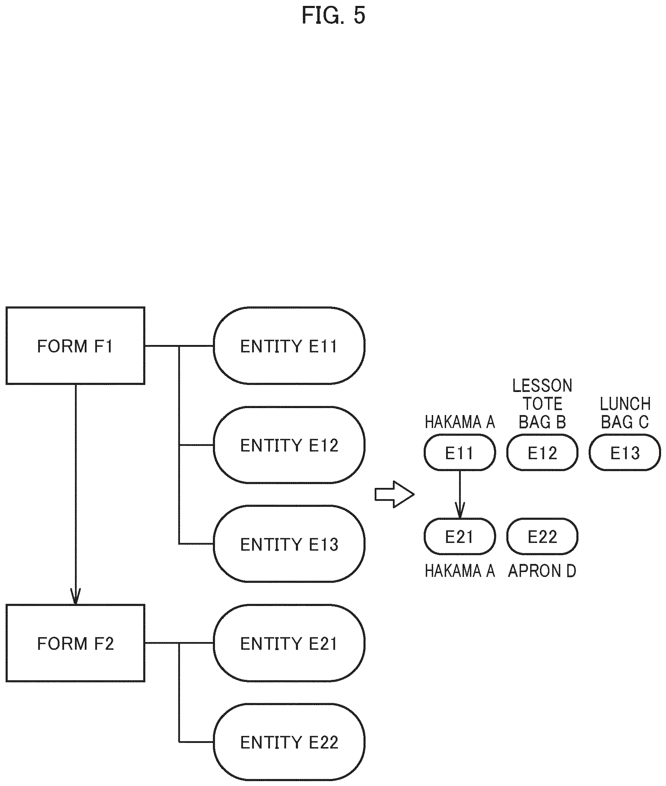

FIG. 5 is a schematic diagram for explaining association setting of forms.

A user can associate one form with another. In FIG. 5, assume that the user P1 has associated the form F2 (design pattern making) with the form F1 (scheduled arrival of mass-produced pieces). In this case, the form F2 that is associated is referred to as a "related form". In contrast, the form F1 with which the form F2 is associated is referred to as an "upper form".

As a result of association of the form F2 with the form F1, the entity E21 (hakama A) derived from the form F2 is associated with the entity E11 (hakama A), among the entities E11 (hakama A), E12 (lesson tote bag B), and E13 (lunch bag C) derived from the form F1. In this case, the entity E21 is referred to as a "related entity", and the entity E11 is referred to as an "upper entity". When selecting an upper entity, the association registering unit 224 searches for a related entity that has some item data in common like "hakama A" (details of which will be described later).

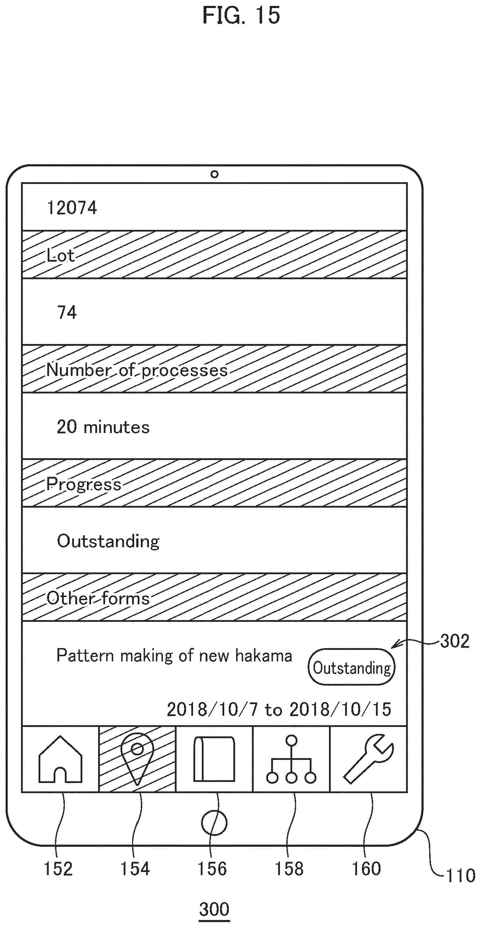

More specifically, when the user P1 makes the entity E11 (scheduled arrival of mass-produced pieces of hakama A: upper entity) be displayed, the entity E21 (design pattern making of hakama A: related entity) is also displayed in association therewith. Thus, when the user P1 checks the scheduled arrival of mass-produced pieces of hakama A, the user P1 can also check the progress of design pattern making of hakama A (which will be described later with reference to FIG. 15).

Association setting of forms is performed for each user. For example, association of the form F2 with the form F1 by the user P1 does not affect the provision of information to another user. Thus, when a user P4 makes the entity E11 (scheduled arrival of mass-produced pieces of hakama A) be displayed, the user screen providing unit 214 does not display the entity E21 (design pattern making of hakama A) as a related entity in association therewith. Each user can freely associate a plurality of forms depending on his/her range of work, in an easy-to-grasp manner for himself/herself, and the like.

In a case where the user P1 has associated the form F2 (design pattern making) with the form F1 (scheduled arrival of mass-produced pieces), the entity E11 (scheduled arrival of mass-produced pieces of hakama A) is not displayed as a related entity in display of the entity E21 (design pattern making of hakama A). This is because the form F1 is not a related form of the form F2 although the form F2 is a related form of the form F1. In this manner, the association setting is unidirectional.

In a case where the user P1 has further associated the form F1 (scheduled arrival of mass-produced pieces) with the form F2 (design pattern making), the form F1 and the form F2 are related forms of each other and upper forms of each other. In this case, when the user P1 makes the entity E21 (design pattern making of hakama A) be displayed, the entity E11 (scheduled arrival of mass-produced pieces of hakama A) is also displayed as a related entity in association therewith.

Explanation of a main processing flow will be provided below focusing on user screens.

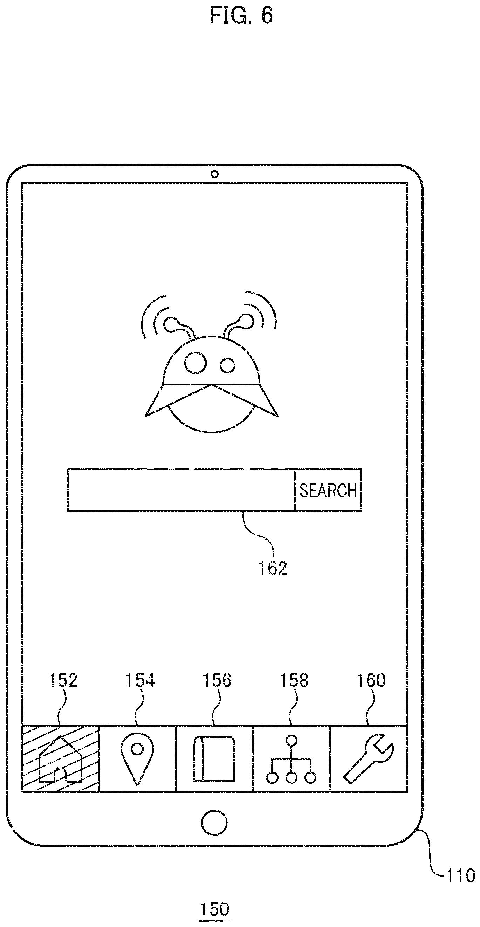

FIG. 6 is a screen diagram of a home screen 150.

For accessing the server 200 from a user terminal 110, a user first enters a user ID (email address) and a password for user registration. When the user accesses the server 200 after user registration, the user screen providing unit 214 of the server 200 displays the home screen 150 on the user terminal 110.

A "user screen" in the embodiment is a generic term for a plurality of kinds of screens, such as the home screen 150, provided from the server 200 to the user terminals 110. A home button 152, a form button 154, a user button 156, a genre button 158, and a custom button 160 are displayed in a lower part of each user screen. The user can cause the home screen 150 to be displayed anytime by touching the home button 152. The form button 154 and other buttons will be described later.

A search region 162 is displayed at the center of the home screen 150. When the user inputs a search term in the search region 162, the search term is transmitted from the user terminal 110 to the server 200. The searching unit 226 searches for a form or an entity including the search term. The user screen providing unit 214 displays a search result on the user terminal 110.

In the following description, assume that user P1 creates the form F1.

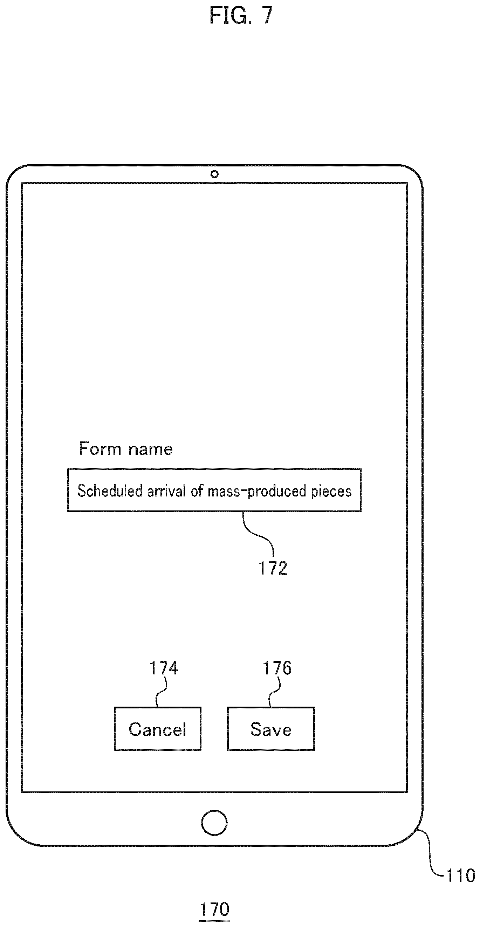

FIG. 7 is a screen diagram of a form creation screen 170.

When the user P1 touches the form button 154 and then touches a new form button (not illustrated), which is displayed on the screen as a result of touching the form button 154, the user screen providing unit 214 causes the form creation screen 170 to be displayed on the user terminal 110. A form name region 172 is displayed at the center of the form creation screen 170. The user inputs the form name of the form F1 in the form name region 172. In FIG. 7, a form name "scheduled arrival of mass-produced pieces" is input. Any name may be used for a form name. When the user P1 touches a cancel button 174, the creation of a form is canceled. When the user P1 touches a save button 176, the form setting unit 216 creates a new form. The form setting unit 216 generates a form ID, and registers the form ID (form F1), the form name (scheduled arrival of mass-produced pieces), and the creator (user P1) in association with each other in the data storage unit 206.

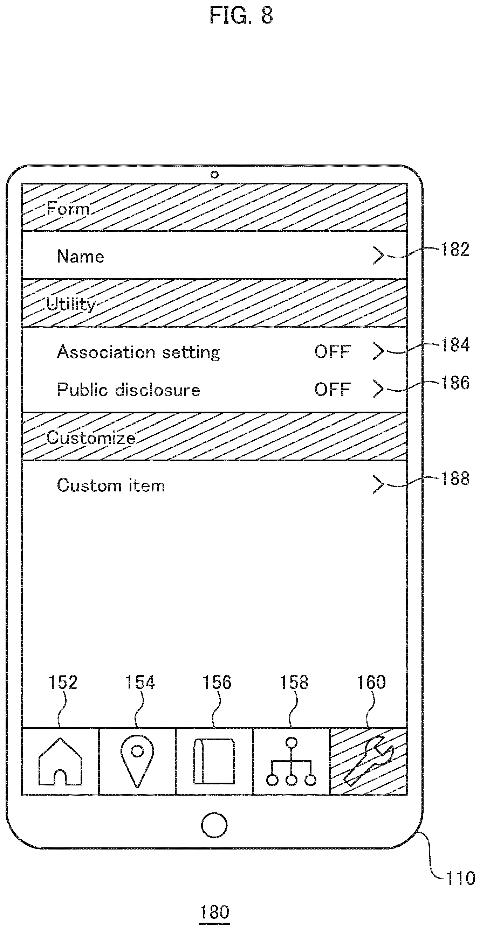

FIG. 8 is a screen diagram of a first form definition screen 180.

When the form F1 is newly created, the user screen providing unit 214 causes the first form definition screen 180 to be displayed. The user defines the data structure of the form F1, that is, enabled items and disabled items on the first form definition screen 180. The user P1 can cause the first form definition screen 180 to be displayed by touching the custom button 160.

When a name change button 182 is touched, the name of a form can be changed. When an association setting button 184 is touched, association can be set, that is, a related form can be selected (which will be described later with reference to FIG. 14).

When a public disclosure button 186 is touched, public disclosure or limited disclosure can be selected. In the case of public disclosure, access to an entity derived from the form F1 (hereinafter may also be referred to as "entity (F1)") is not limited to members. In this case, the entity setting unit 218 may disclose the entity (F1) as a normal web page.

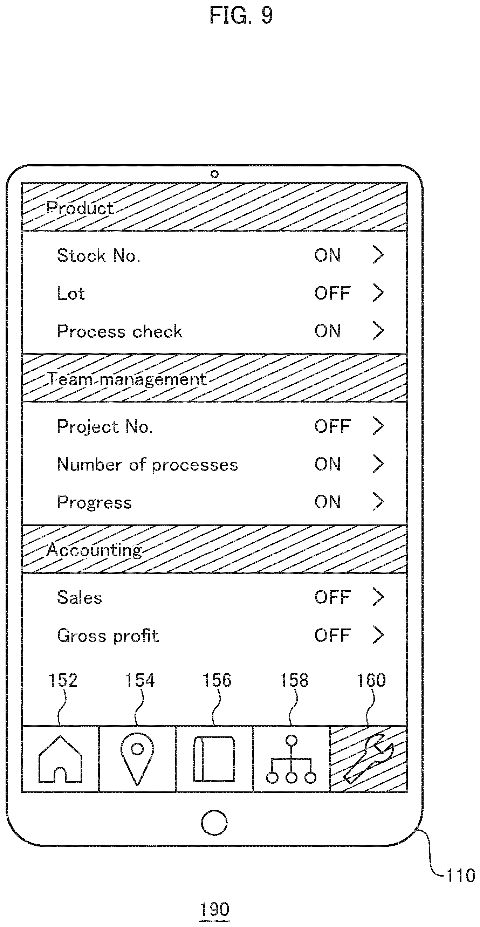

When an item definition button 188 is touched, items to be enabled (hereinafter also referred to as "enabled items") in the form F1 can be selected from the base item group. Details thereof will be described with reference to FIG. 9 below.

FIG. 9 is a screen diagram of a second form definition screen 190.

When the item definition button 188 on the first form definition screen 180 of FIG. 8 is touched, the user screen providing unit 214 causes the second form definition screen 190 to be displayed. The second form definition screen 190 displays the base item group in a form of a list. The user P1 selects items necessary for the form F1, which are enabled items, from the base item group. The user P1 selects ON (enable) or OFF (disable) for each item. The items that are set to be ON are enabled items of the form F1. The item inputting unit 126 detects ON or OFF of each item, the transmitting unit 134 of the user terminal 110 transmits the selection result to the server 200, and the form setting unit 216 registers the enabled items of the form F1 in accordance with the selection result.

Because a plurality of items are provided in advance in the base item group, a user can control the quantity and the quality of information included in a form (entity) by simply selecting enabled items from the base item group. Every form is based on the base item group, which is advantageous in that the data structures of forms vary little depending on the form creators. This item selecting method provides unity of all data structures in addition to ease of form creation and flexibility of form creation.

FIG. 10 is a screen diagram of a member registration screen 230.

The user P1 can add a member to the form F1 by selecting the form F1 and then selecting a member add button (not illustrated), which is displayed on the screen as a result of selecting the form F1. A user to be a member should be a user that is registered in server 200 as a user and that is registered as a "friend" of the user P1, who is the creator of the form.

For example, when the user P1 creates the form F1 and then touches a member add button, which is displayed at a predetermined position such as a right corner on the screen after the form is created, the friend setting unit 228 selects, as member candidates, users that are "friends" of the user P1. According to the member registration screen 230 of FIG. 10, two persons in addition to the user P1, that is, a total of three persons are registered as members of the form F1 being edited. The user P1 can voluntarily withdraw from the members of the form F1 by touching a withdraw button 232. When the member inputting unit 130 has detected touching of the withdraw button 232, the member setting unit 220 removes the user who has touched the withdraw button 232 from a member list of the form.

When the user P1 touches an invite button 234, the member setting unit 220 causes a friend list of the user P1 (not illustrated) to be displayed. The user P1 selects a user to be invited, that is, in other words, a new member of the form F1 from the friend list.

Furthermore, by touching a member name, the user P1 can set whether to permit the member to read item data only or to permit the member to edit (input and modify) item data. The member setting unit 220 registers each form in association with members and whether or not each of the members is permitted to edit the form in the data storage unit 206.

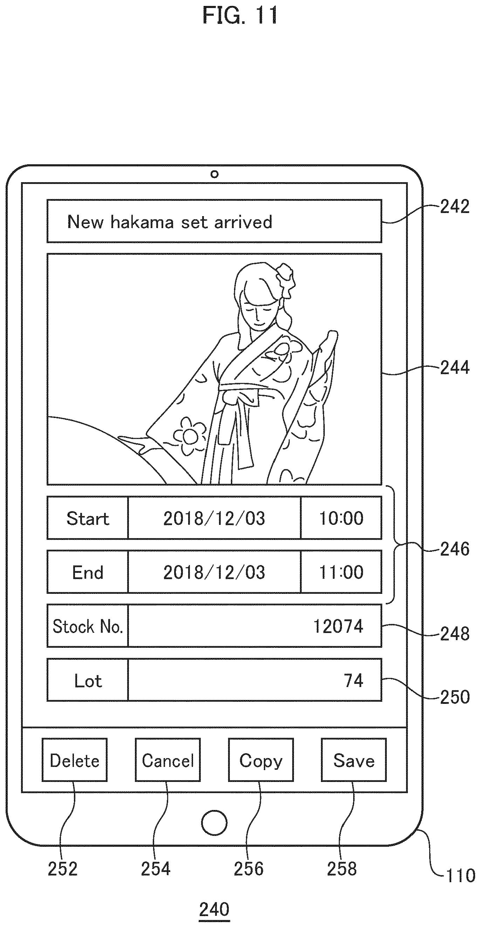

FIG. 11 is a screen diagram of an entity creation screen 240.

When the user selects the created form F1 and then selects a new entity button (not illustrated), which is displayed at a right corner of the screen as a result of selecting the form F1, the user screen providing unit 214 causes the entity creation screen 240 for creating an entity based on the form F1 to be displayed. The entity E11 or the like is generated by inputting item data for enabled items of the form F1.

In the following description, assume that the user P1 creates the entity E11 (scheduled arrival of mass-produced pieces of hakama A) on the basis of the form F1 (scheduled arrival of mass-produced pieces).

The entity creating and inputting unit 128 detects input of item data on the entity creation screen 240. The transmitting unit 134 of the user terminal 110 transmits the input item data together with an item ID to the server 200. The entity setting unit 218 of the server 200 sets an entity ID when an entity is created. The entity setting unit 218 registers the item data with the form ID, the entity ID, and the item ID.

An entity name region 242 is a region for inputting an entity name. The entity name region 242 is an always-enabled item. In FIG. 11, "arrival of new hakama set" is input therein. The entity E11 is an information set relating to "scheduled arrival of mass-produced pieces" of a "new hakama set (hakama A)" base on the form F1 "scheduled arrival of mass-produced pieces".

A photo region 244 is a region for registering a photo. A schedule region 246 is a region for registering a start date and an end date as the schedule of an entity. The schedule region 246 is also an always-enabled item. Registration of a photo is not essential. A stock number region 248 is a region for inputting a stock number (S-No.) (see FIG. 9). The stock number region 248 can be selected to be enabled or disabled. In FIG. 11, a stock number "12074" associated with the hakama A is input therein. A lot region 250 is a region for inputting a lot (see FIG. 9). The user P1 scrolls through the entity creation screen 240 to input item data of other enabled items. Other various items can be enabled. The user P1 can input and check all the item data of the entity E11 by scrolling through the entity creation screen 240.

When the user touches a delete button 252, the entity E11 being created is deleted without being saved. When the delete button 252 is touched while a created entity is being edited, the entity setting unit 218 deletes the entity. When the user touches a cancel button 254, the entity remains but newly input item data is discarded without being registered. The user can make a copy of an entity by touching a copy button 256. When the user touches a save button 258, the entity setting unit 218 formally registers the entity E11 based on the form F1 in the data storage unit 206.

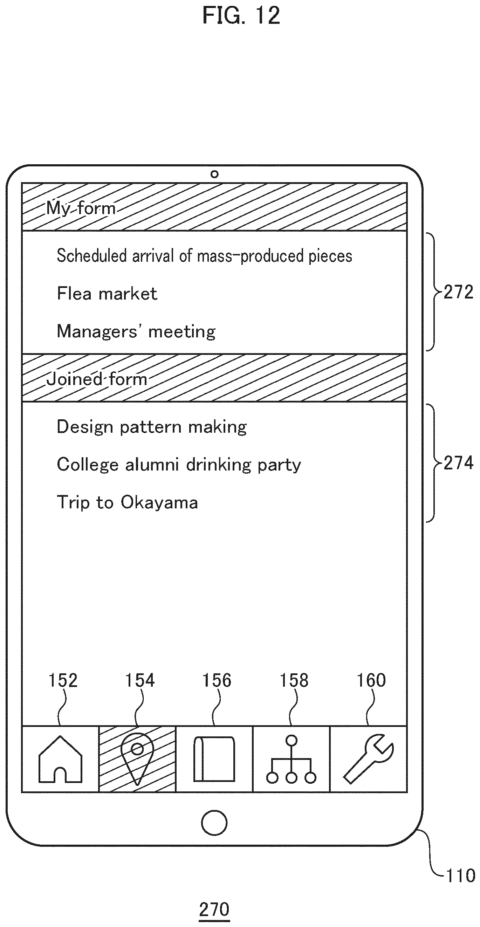

FIG. 12 is a screen diagram of a form list screen 270.

When the user touches the form button 154 after creating some forms or after participating in a form created by another user as a member, a list of forms is displayed. The form list screen 270 is divided into a created form region 272 and a joined form region 274.

A list of forms created by the user P1 is displayed in the created form region 272 on the user terminal 110 of the user P1. A list of forms of which the user P1 is a member among forms created by users other than the user P1 is displayed in the joined form region 274. The form F1 (scheduled arrival of mass-produced pieces) created by the user P1 is displayed in the created form region 272 on the form creation screen 170 of FIG. 7.

The form setting unit 216 of the server 200 creates a number of forms in accordance with instructions to create forms from a number of users. As described above, the form setting unit 216 registers a form ID, the creator of the form, members thereof, and enabled items thereof in association with each other in the data storage unit 206. The user screen providing unit 214 does not display forms of which the user P1 is not a member on the user terminal 110 of the user P1. The user P1 cannot view forms and entities with which the user P1 is not associated. Thus, only information that the user P1 needs can be selected from a vast amount of information accumulated in the data storage unit 206 of the server 200 and provided to the user P1.

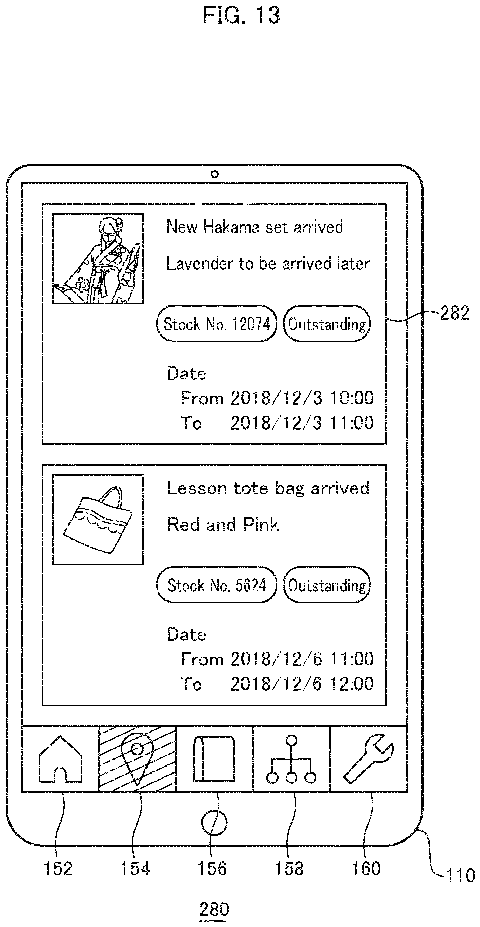

FIG. 13 is a screen diagram of an entity list screen 280.

The entity list screen 280 illustrated in FIG. 13 is displayed when the user P1 touches the form F1 (scheduled arrival of mass-produced pieces) on the form list screen 270 (see FIG. 12). Assume here that a number of entities E11, E12 have been created on the basis of the form F1. The entity list screen 280 displays a list of entities derived from the form F1 (scheduled arrival of mass-produced pieces) in a form of thumbnails (abstract pictures).

A thumbnail 282 is a thumbnail of an entity (scheduled arrival of mass-produced pieces of hakama A; entity name: new hakama set arrived) created on the entity creation screen 240 of FIG. 11. The thumbnail 282 displays only some item data such as a progress status "outstanding" in addition to a reduced image of the photo region 244, the entity name region 242, the schedule region 246, the stock number region 248, and the like among the item data input on the entity creation screen 240. The user P1 can check the schedules, the progress statuses, and the like of the entities relating to the form F1 (scheduled arrival of mass-produced pieces) at the same time by referring to the entity list screen 280.

When the user P1 touches the thumbnail 282 on the entity list screen 280, a group of item data of the entity E11 (scheduled arrival of mass-produced pieces of hakama A) is displayed in detail in the same display format as that on the entity creation screen 240.

FIG. 14 is a screen diagram of an association setting screen 290.

The association setting screen 290 is displayed when the user P1 selects the form F1 (scheduled arrival of mass-produced pieces) and then turns on the "association setting" on the first form definition screen 180 (FIG. 8). The association inputting unit 132 detects the ON state of association setting, the transmitting unit 134 notifies the server 200 of the ON state of association setting, and the user screen providing unit 214 of the server 200 displays the association setting screen 290 on the user terminal 110.

The user screen providing unit 214 displays a list of five forms other than the form F1 (scheduled arrival of mass-produced pieces) among six forms relating to the user P1 (see FIG. 12). Each form is displayed with a checkbox 292. The user P1 ticks a checkbox 292 of a form to be associated with the form F1 (scheduled arrival of mass-produced pieces) or, in other words, a related form of the form F1 (upper form). A plurality of forms may be ticked.

In FIG. 14, the user P1 has ticked the form F2 (design pattern making). When the user P1 touches a save button 296 in this state, the form F2 (design pattern making) becomes related form of the form F1 (scheduled arrival of mass-produced pieces: upper form). The transmitting unit 134 of the user terminal 110 notifies the server 200 of association of the two kinds of forms, and the association registering unit 224 of the server 200 registers the two kinds of forms in association with each other. When the user P1 touches a cancel button 294, the association setting of the forms is not performed.

The association setting is performed in units of users. Thus, the association of the form F2 (related form) with the form F1 (upper form) made by the user P1 does not affect information management of other users. As described above, while the form F2 (design pattern making) is a related form of the form F1 (scheduled arrival of mass-produced pieces), the form F1 (scheduled arrival of mass-produced pieces) is not a related form of the form F2 (design pattern making). Because the association setting is unidirectional in manner, a plurality of forms, or entities derived from the forms, can be made hierarchical. In FIG. 14, when checking the entities derived from the form F1 (scheduled arrival of mass-produced pieces), the user P1 can also check the entities derived from the form F2 (design pattern making) that is a related form of the form F1. This will be described in detail later with reference to FIG. 15.

When the user P1 wants to associate the form F2 (design pattern making) and the form F1 (scheduled arrival of mass-produced pieces) with each other, the user P1 selects the form F2 as an upper form and associates the form F1 (related form) with the selected form F2 on the association setting screen 290. It is assumed in the following description that, for the user P1, the form F1 is an upper form and the form F2 is a related form thereof.

FIG. 15 is a screen diagram of an entity view screen 300.

The entity view screen 300 of FIG. 15 is displayed when the user P1 selects the entity E11 (scheduled arrival of mass-produced pieces of hakama A) on the entity list screen 280. In the entity view screen 300, the item data of the entity E11 can be checked. A related entity region 302 is displayed at a bottom of the entity view screen 300.

The user P1 has associated the form F2 (design pattern making) with the form F1 (scheduled arrival of mass-produced pieces) (see FIG. 14). Assume that the entity E11 is created from the form F1 (upper form), and that the entity E21 (design pattern making of hakama A; entity name: pattern making of new hakama) is created from the form F2 (related form). In this case, the entity E21 (design pattern making of hakama A) is a related entity of the entity E11 (scheduled arrival of mass-produced pieces of hakama A; entity name: new hakama set arrived). When the user P1 causes the entity E11 (upper entity) to be displayed, the entity E21 is displayed as a related entity in the related entity region 302 at the bottom of the entity view screen 300.

When displaying the entity E11, the user screen providing unit 214 also checks "key data", which is item data of a "key item", in addition to the related form. Some items of the base item group are set as key items in advance. In the embodiment, the item "stock number" is a key item (see the stock number region 248 in FIG. 11).

When the entity E11 (upper entity) is selected by the user P1, the user screen providing unit 214 first identifies the form F2, which is a related form of the form F1 (upper form) from which the entity E11 is derived. Subsequently, the user screen providing unit 214 identifies the entities E21 and E22 derived from the form F2 (related form). The item data of the key item (stock number) of the entity E11 (upper entity) is "12074 (hakama A)" (see FIG. 11). The user screen providing unit 214 checks the key items (stock numbers) of the entities E21 and E22, and identifies the entity E21 (design pattern making of hakama A) with the stock number being the same "12074" as that of the entity E11 as a related entity. Such a control method enables the user P1 checking an entity to also check information on another entity related thereto with the same stock number (the same product).

In FIG. 15, while checking the scheduled arrival of mass-produced pieces of hakama A (stock number: 12074), the user P1 can also check the progress status of design pattern making of the same hakama A. When the user P1 touches the related entity region 302, details of the entity E21 (design pattern making of hakama A; entity name: pattern making of new hakama) are displayed.

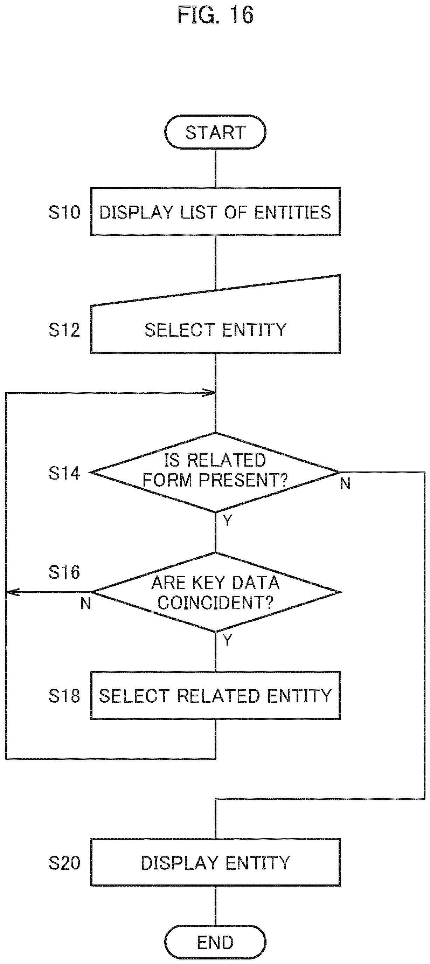

FIG. 16 is a flowchart illustrating processes of entity display.

A user first selects a form in the form list screen 270 to display the entity list screen 280 displaying entities derived from the selected form in a form of thumbnails (S10). Specifically, the transmitting unit 134 of the user terminal 110 transmits a form ID and a user ID to the server 200, and the user screen providing unit 214 of the server 200 generates a web page of the entity list screen 280 and transmits the web page to the user terminal 110. The user selects, on the entity list screen 280, an entity to be displayed in detail (S12).

The user screen providing unit 214 searches for a related form. If a related form is present (Y in S14), the user screen providing unit 214 checks the key data thereof (S16). If no related form is present (N in S14), the process skips to S20. If an entity with coincident key data is present (Y in S16), the related entity is added into the related entity region 302 (S18). If no entity with coincident key data is present (N in S16), another form is checked. After checking all the forms (N in S14), the user screen providing unit 214 displays the entity view screen 300 (S20) .

FIG. 17 is a screen diagram of the form list screen 270 at update notification.

A user permitted to edit among the members of a form (see FIG. 10) can rewrite item data of entities derived from the form. For example, assume that the user P2 has rewritten item data of the entity E11. In this case, the entity updating unit 222 changes and registers the item data of the entity E11, and instructs the update notifying unit 212 to transmit an update notification.

The entity updating unit 222 identifies the users P1, P2, and P3 as members of the entity E11 (see FIG. 4). Because the update is made by the user P2, the entity updating unit 222 provides instruction on an update notification for the users P1 and P3. The update notifying unit 212 transmits the update notification together with the entity ID of the entity E11 to the user terminals 110 of the users P1 and P3.

The update notifying unit 129 of each user terminal 110 first displays an update mark 312 on the form button 154. The update notifying unit 129 also displays the update mark 312 next to the form F1 (scheduled arrival of mass-produced pieces) from which the entity E11 is derived. When the user P1 selects the form F1 to display thumbnails of the entities, the update notifying unit 129 displays the update mark 312 at a position associated with the entity E11. The update mark 312 enables the user to readily know of a change in an entity (schedule of processes, etc.) in which the user is involved. For example, when item data indicating the progress status is changed from "outstanding" to "done", the user can recognize the change in the status from the update mark 312, and check the progress of a schedule in which the user is involved in real time.

FIG. 18 is a schematic diagram for explaining the relation between genres and forms.

As the number of forms increases, the visual recognition of information on the form list screen 270 may be degraded. Thus, in the embodiment, a "genre" is defined as a group of forms. A user can create genres, and associate a plurality of forms with one genre. In FIG. 18, the form F1 (scheduled arrival of mass-produced pieces), the form F2 (design pattern making), and a form F3 (trial production) are associated with a genre J1 (manufacture). In addition, the form F1 (scheduled arrival of mass-produced pieces) and a form F4 (online sales) are associated with a genre J2 (inventory control). Like the case of the form F1, one form may be associated with a plurality of genres.

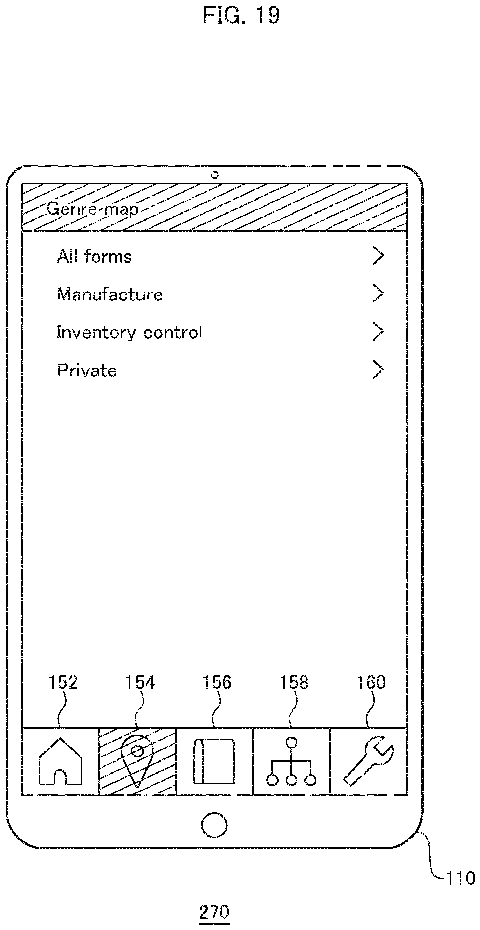

FIG. 19 is a screen diagram of the form list screen 270 when a genre is set.

A user can touch the genre button 158 to display a genre creation screen (not illustrated). On the genre creation screen, the user inputs a genre name, and selects forms to be associated with the genre. The association is performed by a user interface similar to the association setting screen 290 illustrated in FIG. 14. The genre creating and inputting unit 133 associates a genre ID with a form ID on the basis of a result of input from the user. Genres are also set for each user. The genre setting unit 229 of the server 200 sets the relation between genres and forms for each user by associating the user ID, genre IDs and form IDs with each other.

On the form list screen 270 of FIG. 19, a list of three genre names of the genre J1 (manufacture), the genre J2 (inventory control), and a genre J3 (private), and "all forms" is displayed. When the user selects the genre J1 (manufacture), a list of the forms F1, F2 and F3 associated with the genre J1 (manufacture) is displayed in a format similar to that in FIG. 12. When the user selects "all forms", a list of all the forms with which the user P1 is associated is displayed.

Setting of a genre is optional. The user P1 touches the form button 154 to display the form list screen 270, and can then hierarchically reach information included in a plurality of entities by sequentially selecting a genre, a form, and an entity.

### [Overview]

The information management system 100 has been described above on the basis of the embodiment.

According to the information management system 100, a user can create a plurality of entities based on one form as a "standard". Because entities are created from a form, information productivity is improved. A plurality of items (base item group) are provided in advance for each form, and a user can easily define the data structure of a form by selecting enabled items therefrom. Because each form is based on a base item group, a plurality of forms can have unity. A form is customized from the base item group, and an entity is produced as an individual information set from the form.

The quality and the quantity of information of an entity are determined on the basis of the kinds and the number of enabled items. For example, a form (scheduled arrival of mass-produced pieces (overall)) may include minimum enabled items such as stock numbers and a schedule, and a form (scheduled arrival of mass-produced pieces (on site)) may include detailed enabled items such as prices, a ratio of returned unsold products, and locations of display shelves to be reserved at arrival. In this case, a manager may check entities derived from the form (scheduled arrival of mass-produced pieces (overall)), and an on-site personnel may check entities derived from the form (scheduled arrival of mass-produced pieces (details)). In this manner, the amount of information necessary for each user can be adjusted on the basis of job duties and position.

A form creator can register members of a form. Users having access right are set for each form, which enables information necessary for each of a plurality of people involved in a project to be selected and provided. Limiting users having access rights is useful for preventing information leakage through a project. For example, in a case where a project is pursued in cooperation with an outsourcing contractor, there are information to be provided to the outsourcing contractor and information that need not be provided thereto. In this case, registration of members of a form prevents inside information of the project from being excessively leaked to the outsourcing contractor.

When item data of an entity is updated, an update notification is promptly transmitted to people involved in the entity. This enables the change in situation to be quickly shared by the people involved.

For example, assume that, when item data of an entity Ex of a project is updated, all the people involved in the project are notified of the update. In this case, most of the users may not need to know the update of the item data. Thus, if such a method is employed, the users may find the update notification bothersome and end up paying no attention to the update notification. In the embodiment, members are associated with a form, and users to notify of the update can thus be limited, which reduces wasted update notification. As a result, users are more likely to pay attention to update notification.

Members may be associated with a form, or a form may be available to the public. For example, an entity relating to an event planning may be created, and only involved members work on the plan. The exposure of information relating to the event may be gradually increased by increasing the members of the entity at some stage of the work and eventually disclosing the information to the public. Such a control method allows an entity to be used as a tool for advertising to the public.

A user can arrange forms and entities derived from forms in hierarchy by association setting of forms. For example, assume that an entity EB is associated as a related entity of an entity EA, and that an entity EC is associated as a related entity of the entity EB. In this case, the hierarchy of information, in which the entity EA is an uppermost entity, the entity EB is a middle entity, and the entity EC is a lower entity, can be defined. Because such hierarchical arrangement can be defined for each user, the user P1, for example, can freely arrange entities in hierarchy depending on his/her own style of information arrangement. The flexible arrangement of information in hierarchy depending on users allows information to be provided to users in a user-friendly manner. For example, this enables such workflow management as checking the entity EA and, at the same time, checking the progress of the entity EB related thereto.

The present invention is not limited to the embodiment described above and modifications thereof, and any component thereof can be modified and embodied without departing from the scope of the invention. Components described in the embodiment and modifications can be combined as appropriate to form various other embodiments. Some components may be omitted from the components presented in the embodiment and modifications.

### [Modifications]

The embodiment has been described on assumed schedule management of projects relating to design of children's clothing. The information management system 100 can be widely applied to any scene involving information sharing among users relating to not only children's clothing but also software development, product promotions, sport event planning, and others.

In the description of the embodiment, members are associated with a form. In a modification, the member setting unit 220 may associate members with each entity, instead of each form. For example, the member setting unit 220 may associate the users P1 and P2 with the entity E11 derived from the form F1, and associate the users P1 and P3 with the entity E12 derived from the same form F1. Such a control method enables users having access rights to be controlled in unit of entities instead of in units of forms.

In the description of the embodiment, forms are available to the public. In a modification, each entity, instead of forms, may be determined to be available to the public or not to be available to the public.

In the description of the embodiment, association setting is performed between forms. In a modification, association setting may also be enabled between entities.

The entity updating unit 222 may select users to be notified of update on the basis of a key item. For example, assume that item data (for example: scheduling start date) of an entity EY including an item "stock number" being "13068" is updated. In this case, the entity updating unit 222 may detect all the entities including the stock number "13068" as key data, and set the members of these entities as users to be notified of the update. In this manner, users to be notified of update may be selected for each item instead of entity.

A user who updates an entity may input whether or not update notification is necessary when inputting item data. For example, assume that the user P1 has changed item data of an item Q1 of an entity E16. In this case, the output unit 124 of the user terminal 110 asks the user P1 whether or not update notification is necessary. If the user P1 inputs "notification necessary", the entity updating unit 222 notifies the members of the entity E16 to be notified of the update. If the user P1 inputs "notification unnecessary", the entity updating unit 222 does not notify the members of the update of the item Q1. Such a control method prevents frequent update notification due to minor updates.

When creating a form, a user may set items for notification and items not for notification. When item data is updated, the update notifying unit 212 may perform notification when item data of an item for notification is updated, and not perform notification when item data of an item not for notification is updated. According to such a control method, update notification is not performed when item data of relatively low importance is changed, which prevents frequent update notification due to unimportant updates.

A plurality of kinds of update notification may be set. For example, the update mark 312 may be displayed with a large size in a case of important notification, and with a small size in a case of semi-important notification. In addition, when a form is created, items for important notification, items for semi-important notification and items not for notification may be set accordingly.

In the description of the embodiment, association setting of forms is performed for each user. For example, even when the user P1 has associated the form F1 with the form F4, association setting of the form F1 with the form F4 is not performed for the user P2. In a modification, association setting of forms may be performed for all users. For example, when the creator of the form F1 associates the form F1 with the form F4, this association setting may be performed for all the users.

A plurality of key items may be present. For example, assume that two key items Q1 and Q2 are set. The user screen providing unit 214 may select a related entity based on an exact match of key data of the key items Q1 and Q2, or based on a match of at least one of the key data.

The entity setting unit 218 of the server 200 may suggest to an entity creator that an entity that is rarely accessed should be deleted. For example, when an entity E35 has not been edited or view for more than a year since it was created, the entity setting unit 218 may transmit a suggestion that the entity E35 should be deleted to the user who created the entity E35. When the user agrees to delete the entity E35, the entity setting unit 218 deletes the entity E35. Such a control method enables rational deletion of unnecessary entities after a large quantity of entities are created, which facilitates prevention of accumulation of unnecessary information.

The form setting unit 216 may suggest deletion of a form without any entity derived therefrom. The entity setting unit 218 may suggest deletion of an entity relating to an old schedule, such as an entity relating to a schedule of more than a year ago.

The searching unit 226 searches for an entity on the basis of a search term input in the search region 162 on the home screen 150. For example, when a user inputs a search term in the search region 162, an entity with which the user is associated as a member may be detected from among entities including the search term as item data.

The user terminals 110 of the information management system 100 may visually display a diagram of the hierarchical relation of forms, the hierarchical relation of entities, or the relation between genres and forms as illustrated in FIGS. 4, 5, and 18.

Members of a form or an entity may be associated in units of group of users based on the attributes thereof instead of individually. For example, all the users belonging to a marketing department may be associated together with a form F6. In this manner, such a user attribute as "belonging to the marketing department" may be provided, and members may be set on the basis of the user attribute. According to such a control method, when a user P5 moves out from the marketing department, the user P5 loses access rights to entities relating to the marketing department. This control method facilitates appropriate management of access rights to each entity reflecting changes in members in departments.

The description of the embodiment is based on the presence of the server 200. This is based on information sharing among a plurality of user terminals 110. Part of the present embodiment is also applicable to personal information management instead of information management among a group. For example, functions such as creation of an entity based on a form and association setting of forms may be implemented on a user terminal 110, the user's schedule and tickler may be managed in units of entities by the user terminal 110 alone.

### [Supplementary note]

The following invention can further be derived on the basis of the embodiment.
B1. A server connected with a plurality of user terminals via a communication network, the server comprising:
   a user screen providing unit for providing a user terminal with user screens capable of displaying both of a form defining a data structure and an entity being a data set created on the basis of a form;
   an association registering unit for registering association of a second form with a first form when the second form is associated with the first form on a user screen by a user; and
   an entity setting unit for creating an entity when a form is specified and an entity based on the specified form is created on a user screen by a user, wherein
   when displaying a first entity created on the basis of the first form on a user screen, the user screen providing unit displays, as a related entity of the first entity, a second entity created on the basis of the second form.
B2. The server according to B1, wherein when a first user associates the second form with the first form, the association registering unit registers the first form, the second form, and the first user in association with each other, and
   when displaying the first entity on a user screen of the first user, the user screen providing unit displays the second entity as a related entity of the first entity, and when displaying the first entity on a user screen of a second user that does not associate the second form with the first form, the user screen providing unit does not display the second entity as a related entity of the first entity.
B3. The server according to B1 or B2, wherein the entity setting unit sets a data set of an entity by receiving input of item data of one or more items included in a form, and
   the user screen providing unit displays the second entity as a related entity of the first entity when a condition that item data of a key item in the first entity matches with item data of the key item included in the second entity is met.
B4. The server according to any one of B1 to B3, wherein in a case where the second form is associated with the first form unidirectionally, when displaying the first entity on a user screen, the user screen providing unit displays the second entity as a related entity of the first entity, and when displaying the second entity on a user screen, the user screen providing unit does not display the first entity as a related entity of the second entity.
B5. The server according to B4, wherein in a case where the second form is associated with the first form and the first form is associated with the second form, the user screen providing unit also displays the first entity as a related entity of the second entity when displaying the second entity on a user screen.
B6. A user terminal comprising:
   a user screen displaying unit for displaying user screens capable of displaying both of a form defining a data structure and an entity being a data set created on the basis of a form;
   an association inputting unit for obtaining an instruction from a user to associate a second form with a first form on a user screen; and
   an entity creating and inputting unit for receiving an instruction to create an entity based on a form on a user screen, wherein
   when displaying a first entity created on the basis of the first form on a user screen, the user screen displaying unit displays a second entity created on the basis of the second form associated with the first form as a related entity of the first entity.
B7. The user terminal according to B6, wherein when displaying the first entity on a user screen, the user screen displaying unit displays the second entity as a related entity of the first entity, and when displaying the second entity on a user screen, the user screen displaying unit does not display the first entity as a related entity of the second entity.
B8. An information management system comprising one or more user terminals and a server connected with each other via a communication network, wherein
   the server includes:
      a user screen providing unit for providing a user terminal with user screens capable of displaying both of a form defining a data structure and an entity being a data set created on the basis of a form;
      an association registering unit for registering, when a second form is associated with a first form on a user screen by a first user, the first user, the first form, and the second form in association with each other; and
      an entity setting unit for creating an entity when a form is specified and an entity based on the specified form is created on a user screen by a user,
   the user terminal includes:
      a user screen displaying unit for displaying user screens;
      an association inputting unit for obtaining an instruction from a user to associate the second form with the first form on a user screen; and
      an entity creating and inputting unit for receiving input of item data of an item provided in advance in a form and obtaining an instruction to create an entity based on a form on a user screen, and
   when displaying the first entity on a user screen of a first user, the user screen providing unit of the server displays, as a related entity of the first entity, a second entity created on the basis of the second form associated with the first form when a condition that item data of a key item in the first entity matches with item data of the key item included in the second entity is met.

## Claims

1. A server connected with a plurality of user terminals via a communication network, the server comprising:
a user screen providing unit for providing a user terminal with user screens capable of displaying both of a form defining a data structure and an entity being a data set created on the basis of a form;
an entity setting unit for creating an entity in accordance with an entity creating instruction based on selection of a form performed on a user screen by a user and the selected form; and
a member setting unit for setting one or more users to be members of a form or an entity in accordance with specification performed on a user screen by a user, wherein
when providing a user screen to a user, the user screen providing unit selects, as an entity to be displayed on the user screen, an entity with which the user is associated as a member thereof from among a plurality of entities.

2. The server according to claim 1, further comprising:
a form setting unit for creating a form in accordance with a form creating instruction from a user on a user screen, wherein
the form setting unit defines a data structure of a form by enabling an item specified by a user from a plurality of items provided in advance in the form, and
the entity setting unit sets a data set of an entity by receiving input of item data of an item enabled in a form.

3. The server according to claim 1 or 2, further comprising:
an entity updating unit for updating item data of an entity specified on a user screen by a user, in accordance with the specification of the entity and an instruction to update an attribute value of the specified entity; and
an update notifying unit for notifying a user terminal of the update of the specified entity, wherein
the update notifying unit notifies members of the updated entity of the update.

4. The server according to any one of claims 1 to 3, wherein
the form setting unit sets whether to make a form or an entity available to public in accordance with specification by a user, and
the user screen providing unit provides an entity set to be available to public as a disclosed web page.

5. The server according to any one of claims 1 to 4, wherein
an entity is a unit of management of processes included in a product or service development project, and includes, as attribute values of the entity, schedule information including a deadline and progress of the processes.

6. A user terminal comprising:
a user screen displaying unit for displaying user screens capable of displaying both of a form defining a data structure and an entity being a data set created on the basis of a form;
an item inputting unit for receiving, from a user, specification of an item to be enabled from a plurality of items provided in advance in a form;
an entity creating and inputting unit for receiving input of item data of an item enabled in a form; and
a member inputting unit for receiving specification of one or more users to be members of a form or an entity, wherein
the user screen displaying unit selectively displays, on the user screens, an entity with which the user of the user terminal is associated as a member thereof from among a plurality of entities.

7. An information management system comprising:
one or more user terminals and a server connected with each other via a communication network, wherein
the server includes
a user screen providing unit for providing the user terminals with user screens capable of displaying both of a form defining a data structure and an entity being a data set created on the basis of a form;
a form setting unit for defining a data structure of a form by enabling an item specified by a user from a plurality of items provided in advance in the form;
an entity setting unit for setting an entity based on a form by receiving input of item data of an item enabled in the form;
a member setting unit for setting one or more users to be members of a form or an entity in accordance with specification performed on a user screen by a user;
an entity updating unit for updating item data of an entity in accordance with an instruction to update the item data of the entity from a user; and
an update notifying unit for notifying a user terminal of update of an entity,
the user terminal includes:
a user screen displaying unit for displaying user screens;
an item inputting unit for receiving, from a user, specification of an item to be enabled in a form;
an entity creating and inputting unit for receiving input of item data of an item enabled in a form; and
a member inputting unit for receiving specification of one or more users to be members of a form or an entity,
when providing a user screen to a user, the user screen providing unit of the server selects, as an entity to be displayed on the user screen, an entity with which the user is associated as a member thereof from among a plurality of entities,
the update notifying unit of the server sets a member of an updated entity to be a user to be notified of the update, and
the user screen displaying unit of the user terminal displays, on a user screen, an entity with which the user of the user terminal is associated as a member thereof from among a plurality of entities.
